# EUROPEAN PATENT SPECIFICATION

(11) **EP 3 801 913 B1**
(45) Date of publication and mention of the grant of the patent: **26.06.2024**
(21) Application number: 19810776.5
(22) Date of filing: 22.05.2019
(51) Int. Cl.: B03C 1/02, B08B 3/12, C01B 32/158, B03C 1/033, B03C 1/28, B03C 1/30

(54) **APPARATUS AND METHOD FOR PURIFICATION OF CARBON NANOMATERIAL**
VORRICHTUNG UND VERFAHREN ZUR REINIGUNG VON KOHLENSTOFFNANOMATERIAL
APPAREIL ET PROCÉDÉ POUR PURIFICATION DE NANOMATÉRIAU DE CARBONE

(30) Priority: 31.05.2018 NO 20180759
(43) Date of publication of application: 14.04.2021
(73) Proprietor: Bergen Carbon Solutions AS, 5257 Kokstad (NO)
(72) Inventor: SAGMO, Jan Børge, 5227 NESTUN (NO); BLYDT-SVENDSEN, Finn, 5252 SØREIDGREND (NO); FAZEL, Nikou, 5251 Søreidgrend (NO)
(74) Representative: Håmsø Patentbyrå AS
(86) International application number: PCT/NO2019/050114
(87) International publication number: WO 2019/231334

(56) References cited:
- WO-A1-2006/099740
- WO-A2-2005/085131
- CN-A- 106 379 888
- US-A1- 2009 101 505
- US-A1- 2009 171 106
- SHELIMOV K B ET AL: "PURIFICATION OF SINGLE-WALL CARBON NANOTUBES BY ULTRASONICALLY ASSISTED FILTRATION", CHEMICAL PHYSICS LETTERS, ELSEVIER BV, NL, vol. 282, no. 5/06, 23 January 1998 (1998-01-23), pages 429-434, XP001010700, ISSN: 0009-2614, DOI: 10.1016/S0009-2614(97)01265-7
- BONARD J-M ET AL: "PURIFICATION AND SIZE-SELECTION OF CARBON NANOTUBES", ADVANCED MATERIALS, VCH PUBLISHERS, DE, vol. 9, no. 10, 8 August 1997 (1997-08-08) , pages 827-831, XP000695464, ISSN: 0935-9648, DOI: 10.1002/ADMA.19970091014
- LE THIEN-NGA et al.: "Mechanical Purification of Single-Walled Carbon Nanotube Bundles from Catalytic Particles", Nano Letters, 2002, pages 1349-1352, XP002266561, DOI: 10.1021/nl025740f

## Description

The invention relates to an apparatus and a method for purifying carbon nanomaterial.

Carbon nanomaterial (CNM), *e.g.* carbon nanofiber, carbon nanotubes, and graphene, is known to have extraordinary properties, such as having high strength and low weight, and being thermally and electrically conducting. However, their production is expensive and ineffective, and almost always results in the desired type of CNM mixed with some undesired by-product. CNM production is therefore always followed by a purification step if high purity is required.

Various techniques are known for purification of CNM. The two main techniques are based on chemical methods and physical methods, or a combination of the two. However, known techniques or combinations are time consuming and limited to laboratory scale purification. Chemical methods have the disadvantage that the added chemical material may alter the structure of the CNM and thus degrade the physical properties of the CNM. Physical methods are generally less effective than chemical methods. A common and inexpensive physical method for the purification of CNM is filtration, which has the advantage that it does not affect the structure of the CNM. However, simple filtration may be ineffective and only separates the components of the mixture to be filtered based on size. This may be a problem if the smaller components tend to aggregate, for example amorphous carbon, which may thereby be held back in the filter. In summary, known purification methods may have the disadvantages of being expensive and/or ineffective, and they may potentially modify the CNM chemically.

Different purification apparatuses and methods are described in the documents CN 106379888 A, US 2014/109933 A1, WO 2005/085131 A2, US 2014/183139 A1, WO 2014/079505 A1, CN 204018291 U, and WO 2018/054121 A1.

Shelimov, K. B., et al., "Purification of single-wall carbon nanotubes by ultrasonically assisted filtration", Chemical Physics Letters 282 1998 429-434 describes an experimental setup including a filtration funnel, an ultrasonic horn and filter membrane. A pressure differential of approximately 50 Torr is mandatorily applied across the filter membrane. In the Discussion section, this document describes that the filtration method therein disclosed has the disadvantage that some amorphous and onionated particles are left stuck to nanoropes.

The invention has for its object to remedy or to reduce at least one of the drawbacks of the prior art, or at least provide a useful alternative to prior art. The object is achieved through features, which are specified in the description below and in the claims that follow. The invention is defined by the independent patent claims. The dependent claims define advantageous embodiments of the invention.

In a first aspect, the invention relates more particularly to an apparatus as defined in claim 1.

The CNM may be e.g. carbon nanofibers, carbon nanotubes, or graphene. The CNM may exist at least partially as aggregates, so the ultrasonication means and the surfactant may cooperate for effective and rapid dispersion of the CNM. Ultrasonication will provide vibration to the CNM such that aggregates of the CNM may temporarily split up into individual CNM molecules. As CNM is generally hydrophobic, the hydrophobic portion of the surfactants will adhere to the CNM, while the hydrophilic portion will face the solution. The CNM will thus be individually and stably dispersed in the solution. As production of CNM often leads to undesired side products such as amorphous carbon, the ultrasonication means may also break up larger aggregates of these side products into smaller parts. The ultrasonication means may for example comprise an ultrasonic probe within the chamber, and the ultrasonic probe may be connected to a power supply outside of the chamber. An ultrasonic probe may have the advantage of being able to provide the chamber with higher effect than e.g. an ultrasonic bath.

The magnetic field will cause any metallic particles, for example originating as a side product from the CNM production, to be extracted from the solution. The production of carbon nanotubes often requires formation of metal nucleation sites, so these metal nucleation sides may therefore be comprised within the mixture to be purified. The magnetic field may be caused by at least one magnet positioned on the chamber, for example a permanent magnet or an electromagnet. The effect of the metal extraction step will be increased by having a stable dispersion of CNM, since no metal particles will be trapped within CNM aggregates.

The filter provides the apparatus with a method for retaining the CNM after metal particles have been extracted and larger aggregates have been broken up. The filter must be positioned such that the solution flows through the filter. The solution, possibly including micelles, monomeric surfactants, and additional components such as amorphous carbon, will be discharged through the filter, while the CNM and CNM-surfactant complexes will be retained in said filter for further use. Depending of the properties of the surfactant and the filter mesh size, micelles may also be trapped by the filter. The apparatus may further comprise a pump downstream of the filter for providing a lower pressure and thereby sucking the solution through the filter. This may improve the efficiency of the apparatus as the flow through the filter will increase.

The combination in a single chamber of ultrasonication, dispersion of the CNM by surfactants, and extraction of metallic particles using a magnetic field increases the efficiency of the apparatus compared to if the steps were performed sequentially at different locations or devices, both in term of a decrease in the time and manpower needed for filtration and an increase in the resulting degree of purity of the CNM. The increased purity of the CNM is due to the cooperation of the individual steps when perform simultaneously. Ultrasonication helps to disassemble the metallic particles from CNM aggregates, thus causing more metallic particles to be extracted by the magnetic field before they can reassociate with the CNM. If the solution is not subjected to a magnetic field until a later stage, the metallic particles may reassociate with the CNM before they are separated. This could cause some CNM-metal complexes to get caught by the magnetic field, thereby decreasing the CNM yield, and/or some CNM-metal complexes to remain in the filter, whereby all metal particles are not separated from the CNM. Ultrasonication also helps to disassemble any CNM aggregates, whereby the surfactants may better disperse the CNM. Without ultrasonication performed in presence of surfactants, small aggregates of a few CNM molecules could still be present as complexes with the surfactant molecules, as the individual CNM molecules may have reassociated.

In a second aspect, the invention relates more particularly to a method as defined in claim 4. The steps of sonicating a solution comprising CNM and a surfactant and generating a magnetic field to extract metal particles from the solution performed simultaneously obtain higher purity due to beneficial cooperation between the ultrasonication, the presence of the surfactants, and the magnetic field.

The step of filtrating the solution to separate carbon nanomaterial may comprise sucking the solution through the filter using a pump to provide a lower pressure downstream of the filter or pressing the solution through the filter using gas to provide a higher pressure upstream of the filter.

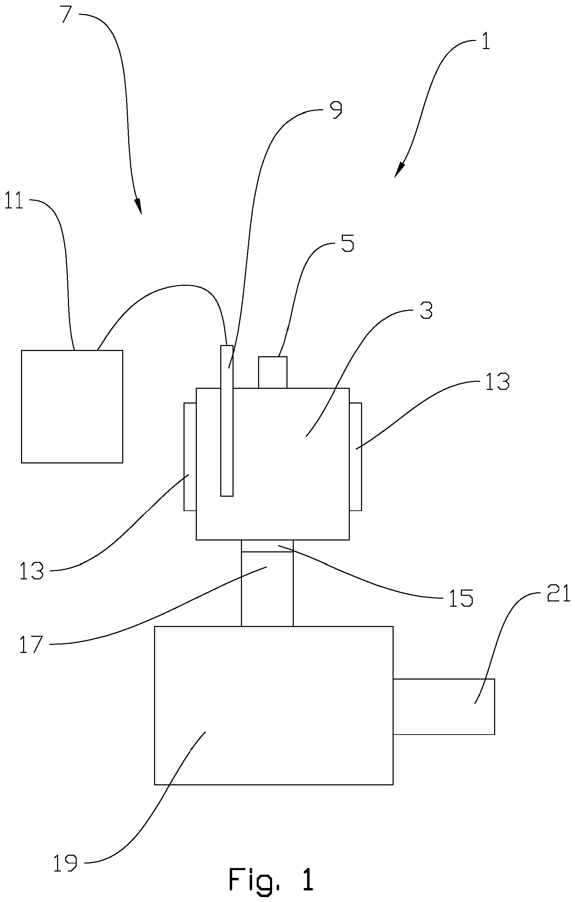

In the following is described an example of a preferred embodiment illustrated in the accompanying drawing, wherein
- Fig. 1: shows an apparatus according to the invention.

In the drawing, the reference numeral 1 indicates an apparatus according to the invention. Identical reference numerals indicate identical or similar features. The drawing is presented in a simplified and schematic manner, and the features therein are not necessarily drawn to scale.

Figure 1 shows an apparatus 1 comprising a chamber 3, for example a 300 mm × 300 mm chamber, for accepting a solution comprising carbon nanomaterial and a surfactant through an inlet 5. The chamber 3 comprises ultrasonication means 7, here shown as an ultrasonic probe 9 connected to a power supply 11, and magnets 13 on the side of the chamber 3 creating a magnetic field in the chamber 3. The ultrasonication means 7 provide the energy to break up aggregates of carbon nanomaterial and amorphous carbon, and the magnets 13 remove any metal remnants left from the production process, for example metal particles which have served as nucleation sites. A filter 15 covers the outlet 17 and functions to retain carbon nanomaterial and complexes of carbon nanomaterial and surfactants while letting through amorphous carbon which has been broken down during ultrasonication, and additional surfactants in monomeric and possibly micellar form. The solution which has passed the filter 15 may be collected in an external collecting container 19. Optionally, the solution may be sucked through the filter 15, for example using a pump 21 to provide a lower pressure in the external collecting container 19.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. An apparatus (1) for purification of carbon nanomaterial, the apparatus (1) comprising a chamber (3) for accepting a solution comprising carbon nanomaterial and a surfactant, wherein the chamber (3) comprises:
- an inlet (5) and an outlet (17) for a liquid;
- ultrasonication means (7) configured for dispersing the carbon nanomaterial and for breaking up aggregates of carbon nanomaterial and amorphous carbon;
- a magnet (13) for creating a magnetic field within the chamber (3) for removing from the solution magnetic impurities disassembled from carbon nanomaterial aggregates during the ultrasonication; and
- a filter (15) downstream of the ultrasonication means (7) and the magnet (13), the filter being configured for separating carbon nanomaterial from the liquid phase and any additional small particles, wherein the apparatus is configured to perform simultaneously the step of ultrasonicating the solution comprising carbon nanomaterial and a surfactant and the step of generating a magnetic field to extract metal particles from the solution.

2. The apparatus (1) according to claim 1, wherein the ultrasonication means (7) comprises an ultrasonic probe (9) within the chamber (3).

3. The apparatus (1) according to claim 1 or 2, wherein the apparatus (1) further comprises a pump (21) downstream of the filter (15) for providing a lower pressure and thereby sucking the solution through the filter (15).

4. A method for purifying carbon nanomaterial using the apparatus (1) according to any of the claims 1-3, the method comprising the steps of:
- sonicating a solution comprising carbon nanomaterial and a surfactant to disperse the carbon nanomaterial and to break up aggregates of carbon nanomaterial and amorphous carbon; and
- filtrating the solution to separate carbon nanomaterial from the liquid phase and any additional small particles; and
- before the filtration step generating a magnetic field to extract from the solution metal particles disassembled from carbon nanomaterial aggregates during the sonication step,
wherein the steps of sonicating a solution comprising carbon nanomaterial and a surfactant to disperse the carbon nanomaterial and generating a magnetic field to extract metal particles from the solution are performed simultaneously.

5. The method according to claim 4, wherein the step of filtrating the solution to separate carbon nanomaterial comprises sucking a portion of the solution through the filter (15) using a pump (21) to provide a lower pressure downstream of the filter (15).

6. The method according to claim 4, wherein the step of filtrating the solution to separate carbon nanomaterial comprises pressing of the solution through the filter (15) using gas to provide a higher pressure upstream of the filter (15).

## Patentansprüche

1. Eine Vorrichtung (1) zur Reinigung von Kohlenstoffnanomaterial, wobei die Vorrichtung (1) eine Kammer (3) zur Aufnahme einer Lösung aus Kohlenstoffnanomaterial und einem Tensid umfasst, wobei die Kammer (3) umfasst:
- einen Einlass (5) und einen Auslass (17) für eine Flüssigkeit;
- eine Vorrichtung zur Ultrabeschallung (7), die so konfiguriert ist, dass sie das Kohlenstoffnanomaterial dispergiert und Aggregate aus Kohlenstoffnanomaterial und amorphem Kohlenstoff aufbricht;
- einen Magneten (13) zum Erzeugen eines Magnetfelds in der Kammer (3), um magnetische Verunreinigungen, die sich während der Ultrabeschallung der Aggregate aus Kohlenstoffnanomaterial lösen, aus der Lösung zu entfernen; und
- einen stromabwärts der Vorrichtung zur Ultrabeschallung (7) und des Magnets (13) angeordneten Filter (15), wobei der Filter so konfiguriert ist, dass er das Kohlenstoffnanomaterial von der flüssigen Phase und sonstigen zusätzlichen kleinen Partikeln trennt, wobei die Vorrichtung so konfiguriert ist, dass sie gleichzeitig den Schritt der Ultrabeschallung der Lösung mit dem Kohlenstoffnanomaterial und einem Tensid und den Schritt des Erzeugens eines Magnetfelds, um Metallpartikel aus der Lösung zu extrahieren, durchführt.

2. Die Vorrichtung (1) nach Anspruch 1, wobei die Vorrichtung zur Ultrabeschallung (7) eine Ultraschallsonde (9) in der Kammer (3) umfasst.

3. Die Vorrichtung (1) nach Anspruch 1 oder 2, wobei die Vorrichtung (1) ferner eine stromabwärts des Filters (15) angeordnete Pumpe (21) umfasst, um einen niedrigeren Druck bereitzustellen und dadurch die Lösung durch den Filter (15) zu saugen.

4. Ein Verfahren zur Reinigung von Kohlenstoffnanomaterial mittels einer Vorrichtung (1) nach einem der Ansprüche 1-3, wobei das Verfahren die folgenden Schritte umfasst:
- Beschallen einer Lösung, umfassend Kohlenstoffnanomaterial und ein Tensid, um das Kohlenstoffnanomaterial zu dispergieren und Aggregate aus Kohlenstoffnanomaterial und amorphem Kohlenstoff aufzubrechen; und
- Filtrieren der Lösung, um das Kohlenstoffnanomaterial von der flüssigen Phase und allen sonstigen kleinen Partikeln zu trennen; und
- Erzeugen eines Magnetfelds vor dem Schritt des Filterns, um Metallpartikel aus der Lösung zu extrahieren, die sich während des Schritts der Beschallung von den Aggregaten des Kohlenstoffnanomaterials lösen,
wobei die Schritte des Beschallens einer Lösung mit Kohlenstoffnanomaterial und einem Tensid, um das Kohlenstoffnanomaterial zu dispergieren, und des Erzeugens eines Magnetfelds, um Metallpartikel aus der Lösung zu extrahieren, gleichzeitig erfolgen.

5. Das Verfahren nach Anspruch 4, wobei der Schritt des Filterns der Lösung zum Abtrennen des Kohlenstoffnanomaterials das Ansaugen eines Teils der Lösung durch den Filter (15) unter Verwendung einer Pumpe (21) umfasst, um einen niedrigeren Druck stromabwärts des Filters (15) zu erzeugen.

6. Das Verfahren nach Anspruch 4, wobei der Schritt des Filterns der Lösung zum Abtrennen des Kohlenstoffnanomaterials das Pressen der Lösung durch den Filter (15) unter Einsatz eines Gases zum Erzeugen eines höheren Drucks stromaufwärts des Filters (15) umfasst.

## Revendications

1. Un appareil (1) pour la purification de nanomatériau de carbone, l'appareil (1) comprenant un compartiment (3) pour recevoir une solution comprenant un nanomatériau de carbone et un tensioactif, dans lequel le compartiment (3) comprend :
- une entrée (5) et une sortie (17) pour un liquide ;
- un moyen d'ultrasonication (7) configuré pour disperser le nanomatériau de carbone et pour séparer les agrégats de nanomatériau de carbone et de carbone amorphe ;
- un aimant (13) pour créer un champ magnétique au sein du compartiment (3) pour éliminer de la solution magnétique les impuretés libérées des agrégats de nanomatériau de carbone durant l'ultrasonication ; et
- un filtre (15) en aval du moyen d'ultrasonication (7) et de l'aimant (13), le filtre étant configuré pour séparer le nanomatériau de carbone de la phase liquide et de toutes autres petites particules supplémentaires, dans lequel l'appareil est configuré pour exécuter simultanément l'étape d'ultrasonication de la solution comprenant le nanomatériau de carbone et un tensioactif, et l'étape consistant à générer un champ magnétique pour extraire des particules de métal de la solution.

2. L'appareil (1) selon la revendication 1, dans lequel le moyen d'ultrasonication (7) comprend une sonde ultrasonique (9) au sein du compartiment (3).

3. L'appareil (1) selon la revendication 1 ou 2, dans lequel l'appareil (1) comprend également une pompe (21) en aval du filtre (15) pour fournir une pression inférieure et aspirer ainsi la solution à travers le filtre (15).

4. Un procédé de purification de nanomatériau de carbone à l'aide de l'appareil (1) selon l'une quelconque des revendications 1-3, le procédé comprenant les étapes de :
- soniquer une solution comprenant un nanomatériau de carbone et un tensioactif pour disperser le nanomatériau de carbone et pour séparer les agrégats de nanomatériau de carbone et de carbone amorphe ; et
- filtrer la solution pour séparer le nanomatériau de carbone de la phase liquide et de toutes particules supplémentaires ; et
- avant l'étape de filtration, générer un champ magnétique pour extraire de la solution des particules de métal libérées des agrégats de nanomatériau de carbone durant l'étape de sonication,
dans lequel les étapes consistant à soniquer une solution comprenant le nanomatériau de carbone et un tensioactif pour disperser le nanomatériau de carbone, et à générer un champ magnétique pour extraire des particules de métal de la solution, sont exécutées simultanément.

5. Le procédé selon la revendication 4, dans lequel l'étape consistant à filtrer la solution pour séparer le nanomatériau de carbone comprend aspirer une portion de la solution à travers le filtre (15) à l'aide d'une pompe (21) pour fournir une pression inférieure en aval du filtre (15).

6. Le procédé selon la revendication 4, dans lequel l'étape consistant à filtrer la solution pour séparer le nanomatériau de carbone comprend presser la solution à travers le filtre (15) à l'aide de gaz pour fournir une pression supérieure en amont du filtre (15).
